# EUROPÄISCHE PATENTSCHRIFT

(11) **EP 4 049 765 B1**
(45) Veröffentlichungstag und Bekanntmachung des Hinweises auf die Patenterteilung: **31.01.2024**
(21) Anmeldenummer: 22158097.0
(22) Anmeldetag: 22.02.2022
(51) Int. Cl.: B07B 1/00, B07B 13/16

(54) **MOBILE MASCHINE ZUR SCHÜTTGUTBEHANDLUNG MIT BEWEGLICHEM KOMPONENTENTRÄGER ÜBER EINER FÖRDERSTRECKE**
MOBILE MACHINE FOR TREATING BULK MATERIAL WITH MOVABLE COMPONENT SUPPORT OVER A CONVEYOR PATH
MACHINE MOBILE DESTINÉE AU TRAITEMENT DE PRODUIT EN VRAC POURVUE DE PORTE-COMPOSANTS SE DÉPLAÇANT SUR UN TRAJET DE TRANSPORT

(30) Priorität: 24.02.2021 DE 102021104450
(43) Veröffentlichungstag der Anmeldung: 31.08.2022
(73) Patentinhaber: Kleemann GmbH, 73037 Göppingen (DE)
(72) Erfinder: Rudolph, Lars, 70439 Stuttgart (DE); Scheurer, Emil, 73117 Wangen (DE)
(74) Vertreter: Ruttensperger Lachnit Trossin Gomoll

(56) Entgegenhaltungen:
- DE-A1-102018 009 801
- US-A- 3 104 037
- US-A1- 2020 384 504

## Beschreibung

Die vorliegende Erfindung betrifft eine mobile, insbesondere selbstfahrende, Maschine gemäß dem Oberbegriff von Anspruch 1.

Eine solche mobile Maschine in Gestalt einer mobilen Siebanlage ist aus der US 2020/0384504 A1 bekannt. Die bekannte Maschine weist eine Aufgabeeinheit auf, die durch eine Fördereinrichtung oder durch ein Förderfahrzeug mit Schüttgut beschickt wird. Die Aufgabeeinheit übergibt Schüttgut an die Förderbaugruppe an einem Aufgabelängsende derselben, von wo aus die Förderbaugruppe das Schüttgut zu einem Übergabelängsende fördert, an welchem die Förderbaugruppe das auf der Förderstrecke verbliebene Schüttgut an wenigstens ein Abzugsband übergibt. Während der Vibrationsförderung längs der geradlinigen Förderbahn wird das Schüttgut durch ein am Boden der Förderbaugruppe ausgebildetes Sieb korngrößenabhängig getrennt. Die so erhaltenen Fraktionen werden unterschiedlichen Abzugsbändern zugeführt und von diesen zur weiteren Verarbeitung von der Siebanlage abtransportiert.

Die Förderstrecke ist rinnenartig ausgebildet und umfasst einen als Sieb ausgebildeten Boden, welcher beiderseits von Seitenwangen begrenzt ist, die eine körperliche Barriere für das auf der Förderstrecke befindliche Schüttgut bilden, sodass dieses nicht seitlich herunterfallen kann, sondern sich, abgesehen von einer Sortierbewegung beim Sieben, nur längs der Förderbahn bewegt.

Die Förderbaugruppe mit der beschriebenen rinnenartigen Förderstrecke kann durch schwenken um eine näher bei dem Aufgabelängsende gelegene Wartungsschwenkachse zu Wartungszwecken relativ zum Maschinenrahmen angehoben werden.

An den Seitenwangen der Förderstrecke sind starr mit den Seitenwangen verbunden Trägerhalter befestigt, welche nach oben über den Rand der Seitenwangen vorstehen. An ihren von den Seitenwangen fernliegenden Längsenden sind die Trägerhalter durch einen Komponententräger verbunden, welcher die Förderstrecke im Wesentlichen parallel zur Wartungsschwenkachse überspannt. Der Komponententräger trägt im Beispiel des Standes der Technik eine Materialbremse in Gestalt eines Vorhangs, welcher als mechanischer Bewegungswiderstand zu große Fördergeschwindigkeiten des Schüttguts auf der Förderstrecke verhindern soll.

Dieser im dargestellten Beispiel des Stands der Technik die Förderstrecke brückenartig überspannende Komponententräger kann zu folgenden Problemen führen: die Förderbaugruppe bildet häufig als Sieb-Förderbaugruppe eine möglichst weit oben, also entfernt vom Aufstandsuntergrund der Maschine, am Maschinenrahmen angeordnete Baugruppe, sodass vom Sieb der Förderbaugruppe durchgelassene Korngrößenfraktionen schwerkraftgetrieben durch das Sieb, gegebenenfalls zur weiteren Sortierung in weitere Siebvorrichtungen, fallen können. Der Komponententräger kann dann soweit die Förderbaugruppe in Höhenrichtung überragen, dass der Komponententräger eine zulässige Transportsilhouette der Maschine nach oben überschreitet. Der Komponententräger muss dann zum Transport der Maschine abmontiert werden.

Außerdem ist der an den Seitenwangen der Vibrationsförderbaugruppe festgelegte Komponententräger durch die Vibrationen der Förderbaugruppe belastet, sodass er entweder nur sehr robuste Funktionsbaugruppen tragen kann oder unter Zwischenanordnung einer aufwändigen Vibrationsentkopplung mit den Seitenwangen verbunden werden muss.

Falls der Komponententräger über seine Trägerhalter nicht starr an der Förderbaugruppe selbst, sondern etwa am Maschinenrahmen befestigt wäre, würde der Komponententräger nicht mit der Förderbaugruppe mitbewegt und könnte deren Bewegung in eine relativ zum Maschinenrahmen angehobene Wartungsstellung behindern. Würde der Komponententräger in Höhenrichtung mit so großem Abstand von der Förderstrecke am Maschinenrahmen befestigt, dass er das Anheben der Förderbaugruppe nicht mehr behindern würde, bestünde erneut das zuvor geschilderte Problem des Überschreitens der Transportsilhouette. Außerdem kann der Komponententräger nicht beliebig weit über der Förderstrecke angeordnet werden, ohne dass dies die Funktionserfüllung der am Komponententräger angeordneten Funktionsbaugruppen beeinträchtigen würde.

Aus der US 3104037 A ist ein sich quer über eine Förderstrecke für Schüttgut erstreckender Komponententräger bekannt. Der Komponententräger trägt Ketten als mechanische Wirkkomponenten, welche vom Komponententräger auf das auf der Förderstrecke geförderte Schüttgut aufliegen. Mittels eines Exzenterantriebs ist der Komponententräger zu einer um seine Längsachse hin und her schwenkenden Bewegung antreibbar.

Weiter sei die DE 10 2018 009 801 A1 genannt, welche eine Vorrichtung zum Trennen von Schutt offenbart. Die bekannte Vorrichtung weist ein umlaufendes Förderband zur Förderung des Schutts auf. Auf dem Obertrum des Förderbands aufliegender Schutt wird nacheinander in der genannten Reihenfolge an einem Rechen, einem auf das Förderband einwirkenden Verdichter-Rüttler und einer Blasdüse vorbeigeführt.

Ausgehend von dem oben Gesagten ist es Aufgabe der vorliegenden Erfindung, die eingangs genannte Maschine derart weiterzubilden, dass sich der Komponententräger im Arbeitszustand der Maschine an einem Ort über der Förderstrecke befindet, welcher für die von ihm getragene wenigstens eine Funktionsbaugruppe möglichst optimal ist. Dabei soll der Komponententräger für Transport oder/und Wartung der übrigen Maschine bzw. der Förderbaugruppe keinen übermäßigen Montageaufwand erzeugen.

Die vorliegende Erfindung löst diese Aufgabe durch eine Maschine mit allen Merkmalen des Anspruchs 1. Dabei ist der Komponententräger sowohl relativ zur Förderbaugruppe als auch relativ zum Maschinenrahmen beweglich an der mobilen Maschine angeordnet. Im Gegensatz zum Komponententräger der aus der US 2020/0384504 A1 bekannten Maschine, welcher gemeinsam mit der Förderbaugruppe relativ zum Maschinenträger beweglich, jedoch relativ zu der ihn tragenden Förderbaugruppe unbeweglich ist, ist die Beweglichkeit des Komponententrägers der vorliegend diskutierten Maschine erhöht. Mit seiner Beweglichkeit sowohl relativ zur Förderbaugruppe als auch relativ zum Maschinenrahmen kann der Komponententräger auf einfache Art und Weise zwischen einer optimalen Arbeitsstellung, in welcher er sich im Arbeitszustand der Maschine befindet, und einer Wartungsstellung, in welcher er sich beispielsweise bei relativ zum Maschinenrahmen angehobener Förderbaugruppe befindet, bewegt werden. Die hierfür notwendige Kinematik des Komponententrägers kann auf Grundlage des Bewegungsraums der Förderbaugruppe relativ zum Maschinenrahmen und der gewünschten Endpositionen einer Bewegung des Komponententrägers einfach ermittelt und an der Maschine realisiert werden.

Grundsätzlich kann der Komponententräger beliebig relativ zum Maschinenrahmen beweglich sein, beispielsweise translatorisch verschiebbar. Aufgrund der häufig durch mineralischen Staub belasteten Arbeitsumgebung des Komponententrägers ist der Komponententräger bevorzugt schwenkbeweglich. Eine Schwenklagerung nimmt weniger Bauraum ein als eine translatorische Bewegungsführung und ist daher mit geringerem Aufwand besser gegenüber einer staubbelasteten Umgebung abschirmbar als etwa eine Linearführung. Zur Sicherstellung der zuvor genannten Relativbeweglichkeit ist der Komponententräger bevorzugt relativ zum Maschinenrahmen um eine Schwenkachse schwenkbeweglich am Maschinenrahmen angeordnet.

Grundsätzlich kann die Förderbaugruppe eine beliebige Baugruppe sein, welche zur Förderung von Schüttgut geeignet ist. Die Förderbaugruppe kann beispielsweise einen Bandförderer mit einem endlos umlaufenden Förderband umfassen, dessen Obertrum darauf aufliegendes Schüttgut längs des Verlaufs des Obertrums fördert. Bevorzugt umfasst die Förderbaugruppe, wie jene des Standes der Technik, einen Vibrationsförderer, besonders bevorzugt mit einer längs der Förderbahn verlaufenden Förderrinne. Wenngleich die Förderbahn krummlinig, etwa wendelförmig verlaufen kann, so ist sie bevorzugt geradlinig.

Weiter bevorzugt erfüllt die Förderbaugruppe neben der Förderung von Schüttgut längs der Förderbahn weitere Funktionen. Gemäß einer bevorzugten Weiterbildung der vorliegenden Erfindung weist die Förderstrecke ein Sieb auf, ist also auch eine Siebstrecke, längs welcher das Schüttgut korngrößenabhängig getrennt wird. Die bevorzugt vorgesehene Förderrinne kann daher durch eine wenigstens abschnittsweise Ausbildung ihres Bodens als Sieb als Sieb-Förderrinne ausgestaltet sein.

Die Förderbaugruppe und die Funktionsbaugruppe am Komponententräger müssen nicht die einzigen Arbeitsbaugruppen der mobilen Maschine sein, wenngleich dies nicht ausgeschlossen sein soll. Die Maschine kann neben der genannten Förderbaugruppe wenigstens eine weitere Fördervorrichtung, insbesondere einen Bandförderer, oder/und wenigstens eine weitere Siebvorrichtung zur weiteren Sortierung des Schüttguts oder/und eine Brecherbaugruppe, etwa einen Kegelbrecher oder/und einen Backenbrecher oder/und einen Prallbrecher, zur Zerkleinerung von wenigstens Teilen des in die Maschine aufgegebenen Schüttguts aufweisen.

Besonders bevorzugt ist die Maschine eine mobile, insbesondere selbstfahrende, Siebanlage mit einer Aufgabeeinheit zur Aufnahme von Schüttgut von außerhalb der Maschine und zur Förderung des Schüttguts zum Aufgabelängsende der oben genannten Sieb-Förderbaugruppe. Die Sieb-Förderbaugruppe fördert das Schüttgut zu seinem entgegengesetzten Übergabelängsende, wo es die auf der Sieb-Förderstrecke verbliebene gröbere Fraktion des geförderten Schüttguts an eine Abzugsfördervorrichtung, insbesondere an ein Abzugsband, übergibt. Die während der Förderung zum Übergabelängsende von der Sieb-Förderstrecke durch deren Sieböffnungen durchgelassene feinere Fraktion kann durch eine weitere Abzugsfördervorrichtung, insbesondere durch ein weiteres Abzugsband, von der Siebanlage weggefördert werden, oder die feinere Fraktion kann durch wenigstens eine weitere Siebvorrichtung korngrößenabhängig in weitere Fraktionen getrennt werden.

Die wenigstens eine weitere Siebvorrichtung befindet sich aus Gründen möglichst kompakten Bauraums bevorzugt unter der Sieb-Förderbaugruppe, sodass die von der Sieb-Förderstrecke durchgelassene feinere Fraktion schwerkraftgetrieben zur weiteren Siebvorrichtung gelangen kann.

Die mobile Maschine umfasst zur Bereitstellung von Arbeitsenergie eine Kraftquelle, bevorzugt eine Brennkraftmaschine, besonders bevorzugt einen Dieselmotor. Als bevorzugte selbstfahrende Maschine weist sie ein Fahrwerk und wenigstens einen Antriebsmotor auf. Der Antriebsmotor kann ein Hydraulikmotor sein. Der notwendige Hydraulikdruck wird durch die Kraftquelle bereitgestellt. Wenngleich das Fahrwerk ein Räderfahrwerk sein kann oder wenigstens ein Rad aufweisen kann, ist wegen der höheren Tragfähigkeit bei gleichem Bauraum und dem in der Regel nur grob texturierten Aufstandsuntergrund der Maschine im Arbeitseinsatz ein Raupenfahrwerk als Fahrwerk bevorzugt. Das Fahrwerk trägt den Maschinenrahmen über dem Aufstandsuntergrund der Maschine.

Zur Entlastung des an der Maschine arbeitenden Personals und zur Sicherstellung der Verstellbarkeit des Komponententrägers weist die mobile Maschine erfindungsgemäß einen Verstellaktuator auf, welcher mit dem Komponententräger derart Bewegung und Kraft übertragend gekoppelt ist, dass der Komponententräger durch den Verstellaktuator zu einer Verstellbewegung relativ zum Maschinenrahmen und auch relativ zur Förderbaugruppe antreibbar ist. Erfindungsgemäß ist der Verstellaktuator auch mit der Förderbaugruppe derart Bewegung und Kraft übertragend gekoppelt, dass auch die Förderbaugruppe durch den Verstellaktuator zu einer Verlagerungsbewegung relativ zum Maschinenrahmen antreibbar ist.

Wenngleich es im Rahmen der vorliegenden Erfindung vorstellbar ist, dass ein und derselbe Verstellaktuator den Komponententräger und die Förderbaugruppe nacheinander bewegt, ist es zur Verkürzung der Rüst- oder/und Wartungszeiten der Maschine vorteilhaft, wenn sich die durch den Verstellaktuator bewirkten Bewegungen von Komponententräger und Förderbaugruppe wenigstens zeitlich überlappen. Hierzu ist bevorzugt vorgesehen, dass ein Ausgangsglied des Verstellaktuators mit einem Gestänge oder Getriebe gekoppelt ist, welches sowohl mit der Förderbaugruppe als auch mit dem Komponententräger Bewegung und Kraft übertragend gekoppelt ist, so dass wenigstens während eines Zeitabschnitts eines Bewegungsbetriebs des Verstellaktuators gleichzeitig sowohl die Förderbaugruppe als auch der Komponententräger verlagert wird. Bevorzugt werden die Förderbaugruppe und der Komponententräger über wenigstens 50 %, besonders bevorzugt über wenigstens 80 % der Bewegungsdauer der Förderbaugruppe gemeinsam und gleichzeitig bewegt.

Der Verstellaktuator kann ein beliebiger Aktuator sein, beispielsweise ein Elektromotor oder ein pneumatischer Aktuator, etwa eine Kolben-Zylinder-Anordnung. Wegen der auf den eingeforderten Bauraum bezogenen vorteilhaft hohen Verstellkraft ist ein hydraulischer Aktuator, insbesondere eine hydraulische Kolben-Zylinder-Anordnung, als der Aktuator bevorzugt.

Für die Erläuterungen der Maschine in der vorliegenden Anmeldung soll die Maschine auf einem Bezugsuntergrund aufgestellt gedacht sein, das ist in diesem Falle ein ebener horizontaler, zur Schwerkraftwirkungsrichtung orthogonaler Aufstandsuntergrund. Die Förderbaugruppe ist mit einer in Höhenrichtung verlaufenden Verlagerungskomponente relativ zum Maschinenrahmen verlagerbar. Bei parallel zum Bezugsuntergrund verlaufender Förderstrecke ist die Höhenrichtung parallel zur Schwerkraftwirkungsrichtung. Dann, wenn die Förderstrecke relativ zum Bezugsuntergrund um einen Neigungswinkel geneigt ist, was in der Regel der Fall ist, denn die virtuelle Förderbahn verläuft in Richtung zum Übergabelängsende hin bevorzugt zum Aufstandsuntergrund hin, ist die Höhenrichtung um denselben Neigungswinkel zur Schwerkraftwirkungsrichtung geneigt. Die Höhenrichtung verläuft jedoch überwiegend längs der Schwerkraftwirkungsrichtung und ist gegenüber dieser in der Regel um weniger als 45° geneigt. Die Förderbaugruppe ist daher auch mit einer längs der Schwerkraftwirkungsrichtung verlaufenden Verlagerungskomponente relativ zum Maschinenrahmen verlagerbar.

Die Förderbaugruppe kann relativ zum Maschinenrahmen translatorisch verlagerbar sein. Bevorzugt ist sie um eine Wartungsschwenkachse schwenkbar, wobei die Förderbaugruppe besonders bevorzugt im Bereich ihres Aufgabelängsendes um die Wartungsschwenkachse schwenkbar am Maschinenrahmen angelenkt ist. Die Wartungsschwenkachse verläuft bevorzugt außerhalb der Förderstrecke in einem dem Aufgabelängsende näher als dem Übergabelängsende gelegenen Erstreckungsbereich der Förderbaugruppe.

Auch eine kombinierte translatorische und rotatorische Verlagerbarkeit der Förderbaugruppe relativ zum Maschinenrahmen ist denkbar, falls die Kinematik des Gestänges oder Getriebes dies erfordert. Jedoch ist die bloße Schwenkbarkeit aufgrund der Robustheit der für ihre Realisierung erforderlichen konstruktiven Maßnahmen an der Maschine bevorzugt. Dies bedeutet, dass bevorzugt das dem Aufgabelängsende längs der Förderbahn entgegengesetzte Übergabelängsende der Förderbaugruppe den längsten Verlagerungsweg aller Orte der Förderbaugruppe relativ zum Maschinenrahmen aufweist. Bevorzugt ist der Komponententräger im Arbeitszustand der Maschine dem Übergabelängsende näher gelegen als dem Aufgabelängsende.

Grundsätzlich kann das Gestänge oder Getriebe ein Rädergetriebe aufweisen. Zur Erzielung großer Verlagerung- und Verstellwege mit möglichst wenig Bauteilen umfasst das Gestänge oder Getriebe bevorzugt einen Hebel, welcher einen Anlenkabschnitt aufweist, in dem er um eine Anlenkachse schwenkbar am Maschinenrahmen angelenkt ist, und welcher einen Kopplungsabschnitt aufweist, in dem er mit der Förderbaugruppe gekoppelt ist. Die Kopplung mit der Förderbaugruppe kann eine gleitende Kopplung sein, sodass sich bei Betätigung des Hebels durch den Verstellaktuator der Kopplungsort des Hebels mit der Förderbaugruppe verändert, insbesondere an der Förderbaugruppe wandert. Gerade bei der bevorzugten Verwendung einer Kolben-Zylinder-Anordnung als der Verstellaktuator kann der Hebel den Hub des Verstellaktuators effektiv verlängern, sodass ein vorteilhaft kurzer Verstellaktuator eingesetzt werden kann.

Wenngleich der Komponententräger, bevorzugt über wenigstens einen seitlichen Trägerhalter, wiederum mit dem Hebel durch ein weiteres Gestänge oder/und ein weiteres Getriebe relativbeweglich verbunden sein kann, ist der Komponententräger aus Gründen einer möglichst robusten Konstruktion mit möglichst wenigen Bauteilen, bevorzugt starr mit dem Hebel zur gemeinsamen Schwenkbewegung um die Anlenkachse als der Schwenkachse des Komponententrägers verbunden.

Die Schwenkachse des Komponententrägers verläuft bevorzugt orthogonal zur Förderbahn oder/und orthogonal zur Höhenrichtung und ebenso bevorzugt parallel zum Bezugsuntergrund. Bevorzugt sind daher die Schwenkachse des Komponententrägers und die Wartungsschwenkachse der Förderbaugruppe zueinander parallel.

Folglich kann die mobile Maschine durch Relativbewegung der Förderbaugruppe relativ zum Maschinenrahmen mit der Bewegungskomponente in Höhenrichtung in einen vom Arbeitszustand verschiedenen Wartungszustand gebracht werden. In diesem Wartungszustand kann der Komponententräger in einem Bereich angeordnet sein, welcher sich nicht mehr über der Förderstrecke befindet, sondern längs der Förderbahn außerhalb des Erstreckungsbereichs der Förderstrecke gelegen ist. Somit kann der Komponententräger eine Bewegung der Förderbaugruppe vom Maschinenrahmen weg und eine Wartung der Förderbaugruppe von oben nicht behindern.

Der Komponententräger kann die Förderstrecke brückenartig überspannen, was eine stabile Lagerung des Komponententrägers an Trägerhaltern beiderseits der Förderstrecke ermöglicht. Alternativ kann der Komponententräger galgenartig nur auf einer Seite der Förderstrecke durch einen Trägerhalter mit dem Maschinenrahmen verbunden sein und auskragend von dem Trägerhalter über die Förderstrecke einragen. Die galgenartige Anordnung des Komponententrägers ist zwar weniger stabil als die brückenartige, ermöglicht jedoch auf jener Seite der Förderstrecke, auf welcher kein Trägerhalter angeordnet ist, eine etwaig vorhandene Fördervorrichtung, etwa ein Abzugsband ungehindert über die Förderbaugruppe bewegen zu können.

Zu demselben Zweck kann der wenigstens eine Trägerhalter in seinem Verlauf von seinem Anlenkort am Maschinenrahmen bzw. an dem Hebel des Gestänges oder/und Getriebes zum Komponententräger um eine zur Schwenkachse des Komponententrägers vorzugsweise parallele Krümmungs- bzw. Knickachse gekrümmt oder/und geknickt ausgeführt sein. Auch hierdurch kann Raum zur kollisionsfreien Anordnung einer Fördervorrichtung relativ zum Komponententräger geschaffen werden. Ein Knick ist vorzugsweise in der dem Anbringungsort am Maschinenrahmen bzw. am Hebel nähergelegenen Hälfte des wenigstens einen Trägerhalters angeordnet. Dann kann der Knickwinkel vergleichsweise gering ausfallen und trotzdem eine nennenswerte Veränderung der Position des Komponententrägers, verglichen mit einem geradlinigen Trägerhalter, erreicht werden. Der Knickwinkel kann beispielsweise zwischen 5° und 25° betragen.

Die wenigstens eine Funktionsbaugruppe am Komponententräger kann eine Materialbremse sein, welche als Vorhang, beispielsweise als Ketten- oder Lappenvorhang in Richtung zur Förderstrecke vom Komponententräger herabhängt und auf der Förderstrecke gefördertes Schüttgut berührt und so mechanisch abbremst. Die Funktionsbaugruppe kann zusätzlich oder alternativ eine Sprühvorrichtung sein, welche zur Verringerung der Staubentwicklung über der Förderstrecke Flüssigkeit, vorzugsweise Wasser, zur Förderstrecke ausbringt, sei es als Sprühnebel, als Beregnung oder als Schwallschüttung. In diesem Fall steht die Funktionsbaugruppe in strömungsmechanischem Wirkzusammenhang mit dem Schüttgut.

Die Funktionsbaugruppe am Komponententräger kann zusätzlich oder alternativ eine Beleuchtungsvorrichtung sein, welche die Förderstrecke beleuchtet, oder kann eine Kamera sein, welche die Förderstrecke im sichtbaren Wellenlängenbereich oder/und im Infrarotbereich erfasst und die erfasste Information zu einem Maschinenführer überträgt. Dann steht die Funktionsbaugruppe strahlungstechnisch im Wirkzusammenhang mit dem Schüttgut bzw. der Förderstrecke.

Weiter zusätzlich oder alternativ kann die Funktionsbaugruppe ein Mikrofon oder einen Ultraschallsensor aufweisen, welcher die Förderstrecke und darauf gefördertes Schüttgut akustisch erfasst.

Die vorliegende Erfindung wird nachfolgend anhand der beiliegenden Zeichnungen näher erläutert. Es stellt dar:
- Fig. 1: eine schematische perspektivische Ansicht einer erfindungsgemäßen selbstfahrenden Maschine in Gestalt einer Siebanlage im Arbeitszustand,
- Fig. 2: eine schematische perspektivische vergrößerte Ansicht des Bereichs des Übergabelängsendes der Förderbaugruppe der Maschine von Fig. 1 im Arbeitszustand,
- Fig. 3: eine schematische perspektivische vergrößerte Ansicht des Bereichs des Übergabelängsendes der Förderbaugruppe der Maschine von Fig. 1 im Wartungszustand mit angehobener Förderbaugruppe,
- Fig. 4: eine schematische Seitenansicht des Bereichs des Übergabelängsendes der Förderbaugruppe der Maschine von Fig. 1 im Arbeitszustand, und
- Fig. 5: eine schematische Seitenansicht des Bereichs des Übergabelängsendes der Förderbaugruppe der Maschine von Fig. 1 im Wartungszustand.

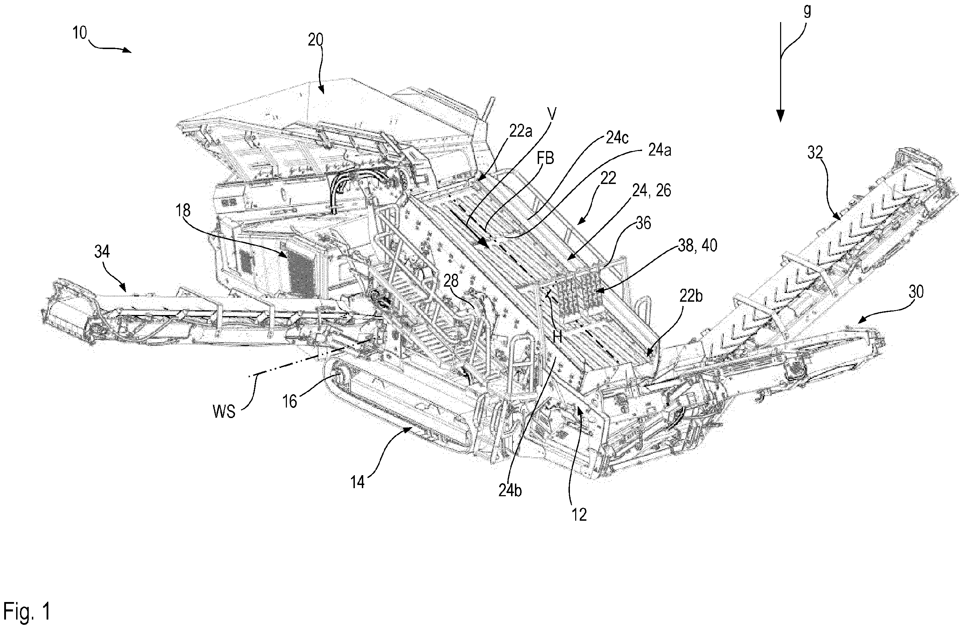

In Figur 1 ist eine erfindungsgemäße Ausführungsform einer mobilen Maschine der vorliegenden Anmeldung allgemein mit 10 bezeichnet. Die Maschine 10 ist eine selbstfahrende Siebanlage mit einem Maschinenrahmen 12, welcher von einem Raupenfahrwerk 14 getragen ist, das durch einen Hydromotor 16 angetrieben ist. Die Maschine weist als Kraftquelle zur Bereitstellung der an der Maschine benötigten Energie eine in einem Motorraum 18 aufgenommene, in Figur 1 nicht dargestellte Diesel-Brennkraftmaschine auf.

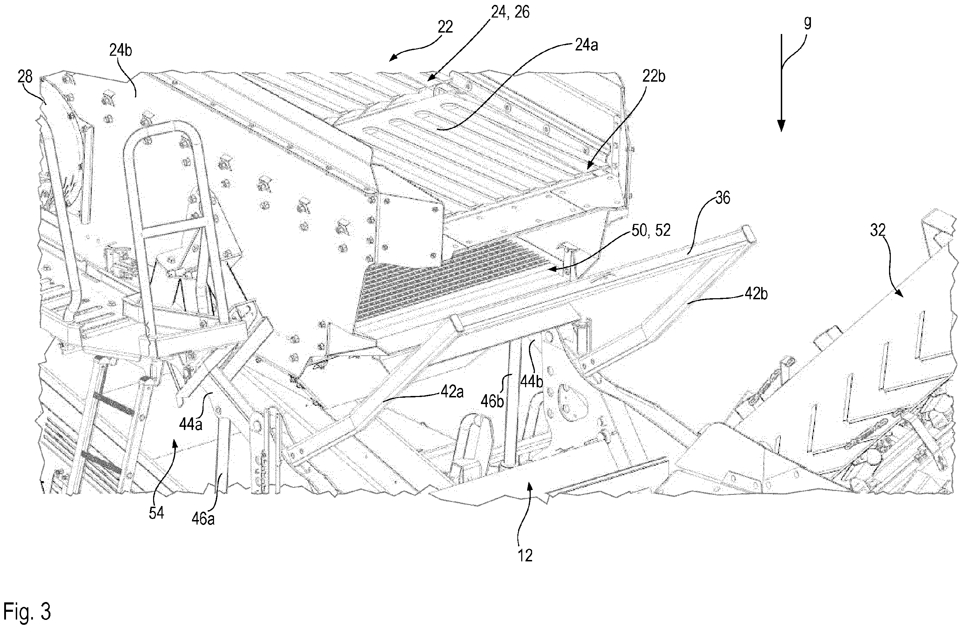

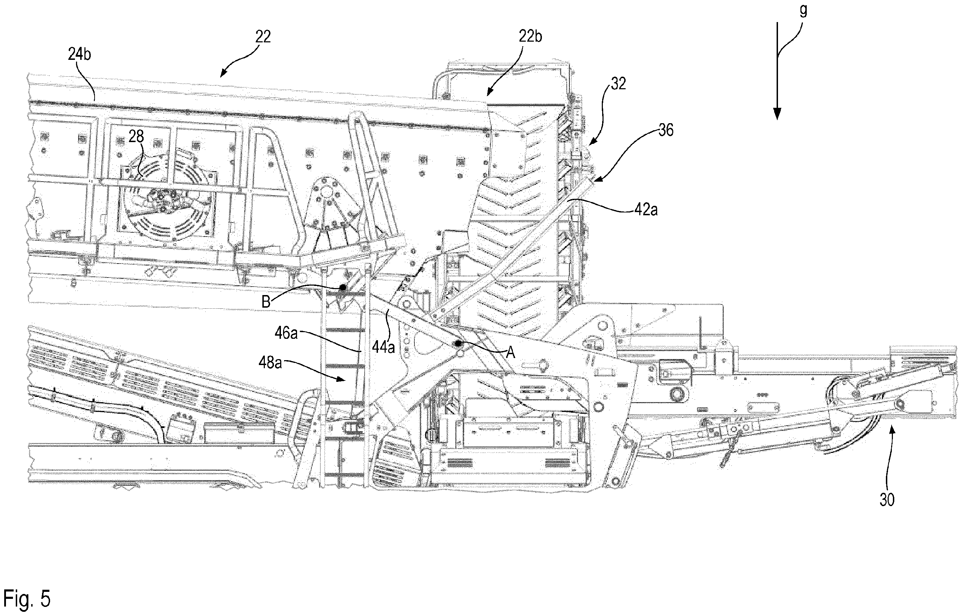

Über dem Motorraum 18 ist im Arbeitszustand der Maschine 10 eine Aufgabeeinheit 20 angeordnet, in welche von der Maschine 10 gesonderte Förderfahrzeuge, wie beispielsweise Bagger oder Radlader, oder auch eine von der Maschine 10 gesonderte Fördervorrichtung, wie Bandförderer, Schüttgut, in der Regel mineralisches Schüttgut, wie Stein oder/und Beton, eingeben. Die Aufgabeeinheit 20, die eine Vibrationsfördervorrichtung ist, fördert das in sie eingegebene Schüttgut zu einem Aufgabelängsende 22a einer an die Aufgabeeinheit 20 anschließenden Förderbaugruppe 22. Die Förderbaugruppe 22 ist um eine Wartungsschwenkachse WS relativ zum Maschinenrahmen 14 von ihrer in den Figuren 1, 2 und 4 gezeigten Arbeitsstellung im Arbeitszustand der Maschine 10 im Gegenuhrzeigersinn in ihre in den Figuren 3 und 5 gezeigte Wartungsstellung in einem Wartungszustand der Maschine 10 und im Uhrzeigersinn wieder zurück in die Arbeitsstellung schwenkbar. Die Wartungsschwenkachse WS verläuft orthogonal zur Förderbahn FB, zur weiter unten erläuterten Höhenrichtung H und zur Schwerkraftwirkungsrichtung g.

Die Förderbaugruppe 22 übernimmt an ihrem Aufgabelängsende 22a das Schüttgut von der Aufgabeeinheit 20. Die Förderbaugruppe 22 umfasst eine als Förderrinne 24 ausgebildete Förderstrecke 26 mit einem als Sieb, insbesondere als Fingersieb, ausgebildeten Boden 24a und mit Seitenwangen 24b und 24c. An der vom Boden 24a weg weisenden Außenseite der Seitenwange 24b ist ein Vibrationsmotor 28 dargestellt, welcher die Vibrationsanregung für die eine Vibrationsfördervorrichtung bildende Förderbaugruppe 22 liefert.

Die Förderbaugruppe 22 fördert das ihr am Aufgabelängsende 22a übergebene Schüttgut längs der virtuellen Förderbahn FB auf der Förderstrecke 26 zu ihrem entgegengesetzten Übergabelängsende 22b, wobei das Schüttgut während der Bewegung längs der Förderbahn FB durch das Sieb in zwei Fraktionen getrennt wird, nämlich in eine gröbere Fraktion, welche aufgrund ihrer Korngröße die Öffnungen des Fingersiebs nicht durchdringen kann und deshalb auf der Förderstrecke 26 verbleibt, und in eine feinere Fraktion, welche ebenfalls aufgrund ihrer Korngröße durch die Öffnungen des Fingersiebs hindurch gelangt und wenigstens eine weitere unter der Förderbaugruppe 22 gelegene Siebvorrichtung erreicht. Die Siebvorrichtungen sind als sogenannte "Siebdecks" bauraumsparend über- bzw. untereinander angeordnet.

Die gröbere Fraktion wird am Übergabelängsende 22b von der Förderbaugruppe 22 an eine beispielhaft als Bandfördervorrichtung ausgestaltete erste Abzugsfördervorrichtung 30 übergeben. Die Abzugsfördervorrichtung 30 fördert die gröbere Fraktion von der Maschine 10 weg zur weiteren Verarbeitung oder Lagerung.

Die Maschine 10 weist in dem dargestellten Beispiel eine zweite Abzugsfördervorrichtung 32 auf, wiederum beispielhaft als Bandfördervorrichtung, durch welche ein wiederum gröberer Teil der feineren Fraktion des von der Sieb-Förderbaugruppe 22 geförderten und gesiebten Schüttguts von der Maschine 10 zur weiteren Verwendung weg transportiert wird.

Eine näher am Aufgabelängsende 22a der Förderbaugruppe 22 gelegene dritte Abzugsfördervorrichtung 34, wiederum in Gestalt eines Abzugsbandes, kann den feineren Teil der feineren Fraktion des von der Sieb-Förderbaugruppe 22 geförderten und gesiebten Schüttguts nach einem erneuten Sieben durch das unter der Sieb-Förderbaugruppe 22 gelegene weitere Siebdeck 52 (s. Fig. 3) von der Maschine 10 weg transportieren. Die dritte Abzugsfördervorrichtung 34 kann durch ein unter dem weiteren Siebdeck 52 gelegene Transferfördervorrichtung 54 (s. Fig. 3), beispielsweise wiederum eine Bandfördervorrichtung, beschickt werden.

In dem in Figur 1 gezeigten Arbeitszustand der Maschine 10 liegt das Übergabelängsende 22b geodätisch tiefer als das Aufgabelängsende 22a, sodass die Förderstrecke 26 längs der Förderrichtung V ein Gefälle aufweist, welches die Förderung von Schüttgut vom Aufgabelängsende 22a zum Übergabelängsende 22b unterstützt.

Lediglich der Vollständigkeit wegen sei angemerkt, dass die Aufgabeeinheit 20 das in sie eingegebene Schüttgut im dargestellten Beispiel gegen eine Steigung, also bergauf, fördert.

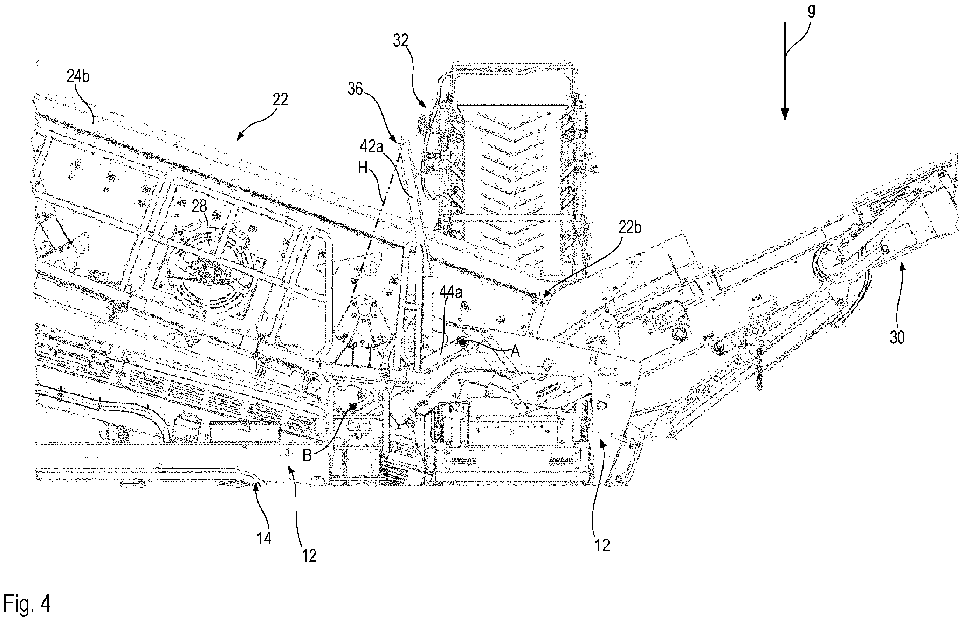

Mit Abstand längs einer zum Boden 24a orthogonalen Höhenrichtung H erstreckt sich ein Komponententräger 36 quer über die Förderstrecke 26. Die Höhenrichtung H ist am besten in der Seitenansicht von Fig. 4 zu erkennen. Von dem Komponententräger 36 hängt als eine mögliche Funktionsbaugruppe 38 ein Kettenvorhang 40 als Materialbremse herab, um von der Sieb-Förderbaugruppe 22 gefördertes Schüttgut durch körperlichen Kontakt mechanisch abzubremsen und zu hohe Fördergeschwindigkeiten zu vermeiden. Wegen des Gefälles der Förderstrecke 26 ist die Höhenrichtung H gegenüber der Schwerkraftwirkungsrichtung g geneigt.

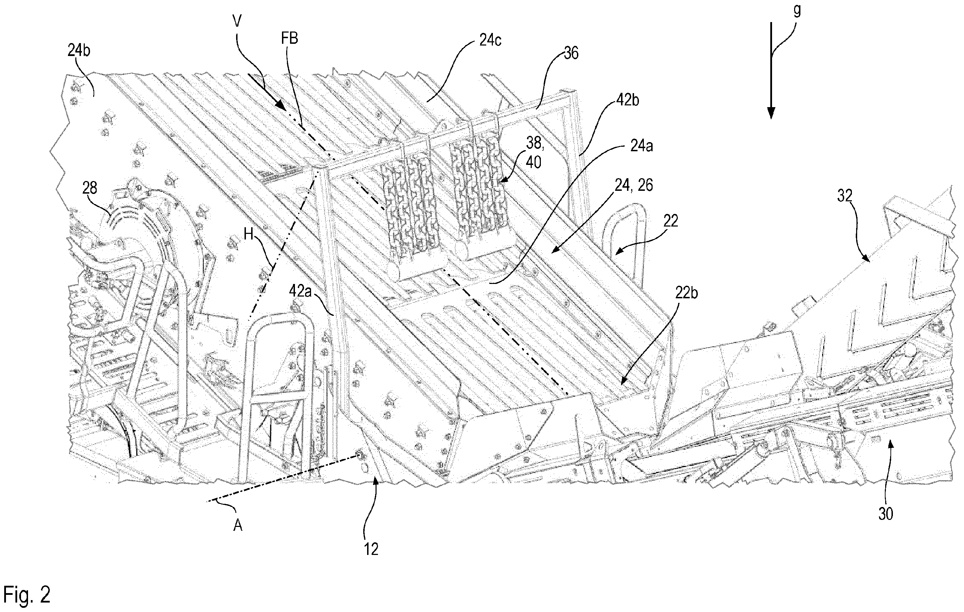

In Figur 2 ist die dem Übergabelängsende 22b nähergelegene Hälfte der Förderbaugruppe 22 vergrößert dargestellt. Der Komponententräger 36 ist beiderseits der Förderbaugruppe 22 über je einen Trägerhalter 42a und 42b sowie über je einen Gestänge-Hebel 44a bzw. 44b (siehe Figuren 3, 4 und 5) schwenkbar am Maschinenrahmen 12 angelenkt. Die Hebel 44a und 44b sind normalerweise bei Betrachtung von außen durch einen Abschnitt des Maschinenrahmens 12 verdeckt und nicht sichtbar. In den Figuren 4 und 5 ist der Maschinenrahmen 12 teilweise geschnitten, sodass der Hebel 44a vollständig sichtbar ist.

Die Hebel 44a und 44b sind mit Kolbenstangen 46a bzw. 46b als Ausgabeglieder von als hydraulisch betätigte Kolben-Zylinder-Anordnungen ausgebildeten Aktuatoren 48a bzw. 48b verbunden, sodass ein Ausfahren und ein Einziehen der Kolbenstangen 46a und 46b eine Schwenkbewegung der Hebel 44a bzw. 44b um ihre in den Figuren 2, 4 und 5 gezeigte Anlenkachse A bewirkt. Genauer bewirkt ein Ausfahren der Kolbenstangen 46a und 46b im dargestellten Beispiel eine Schwenkbewegung der Hebel 44a bzw. 44b im Uhrzeigersinn bei Betrachtung der Figuren 4 und 5. Ein Einziehen der Kolbenstangen 46a und 46b bewirkt dementsprechend eine Schwenkbewegung der Hebel 44a bzw. 44b bei Betrachtung der Figuren 4 und 5 im Gegenuhrzeigersinn. Die Anlenkachse A ist im dargestellten Beispiel parallel zur Wartungsschwenkachse WS, also orthogonal zur Förderbahn FB und zur Schwerkraftwirkungsrichtung g sowie zur Höhenrichtung H. Die Anlenkachse A ist orthogonal zu den Zeichenebenen der Figuren 4 und 5.

Die Konstruktion des Hebels 44a, des Aktuators 48a, und des Trägerhalters 42a auf der einen Seite der Maschine 10 ist bezüglich einer vertikalen Längsmittelebene der Maschine 10 zur Konstruktion des Hebels 44b, des Aktuators 48b, und des Trägerhalters 42b auf der in Breitenrichtung der Maschine 10 entgegengesetzten anderen Seite der Maschine 10 spiegelbildlich.

Die Hebel 44a und 44b sind an dem mit B gekennzeichneten Ort mit der Förderbaugruppe 22 gekoppelt. Ein Ausschieben der Kolbenstangen 46a und 46b im Arbeitszustand der Figuren 1, 2 und 4 führt zu einer Schwenkbewegung der Hebel 44a und 44b bei Betrachtung der Figuren 4 und 5 im Uhrzeigersinn, wodurch das Übergabelängsende 22b der Förderbaugruppe 22 im Gegenuhrzeigersinn um die Wartungsschwenkachse WS angehoben wird. Erforderlichenfalls kann an einem der Orte A, B oder an der Schwenklagerung um die Wartungsschwenkachse WS ein translatorischer Bewegungsfreiheitsgrad vorgesehen sein. Der Ort "B" kann eine sich über wenigstens einen Teil der Breite der Förderbaugruppe 22 erstreckende Gerade sein.

In Figur 3 ist unter der in die Wartungsstellung angehobenen Förderbaugruppe 22 die weitere Siebvorrichtung 50 in einem unter der Förderbaugruppe 22 gelegenen weiteren Siebdeck 52 erkennbar. Ebenfalls erkennbar ist die Transferfördervorrichtung 54, ausgebildet als Transferband, welche die von der Siebvorrichtung 50 durchgelassene feinste Fraktion des von der Maschine 10 gesiebten Schüttguts zur Abzugsfördervorrichtung 34 fördert.

Die Trägerhalter 42a und 42b weisen in ihrer dem jeweils mit ihnen verbundenen Hebel 44a bzw. 44b näher gelegenen Erstreckungshälfte einen Knick auf, durch welchen der Komponententräger 36, verglichen mit einer geradlinigen, gestreckten Ausbildung der Trägerhalter 42a und 42b, im Arbeitszustand der Maschine 10 zum Aufgabelängsende 22a hin verlagert ist. Hierdurch wird eine bezüglich des Komponententrägers 36 kollisionsfreie Relativbeweglichkeit, insbesondere eine Annäherbarkeit, der Abzugsfördervorrichtung 32 an die Förderbaugruppe 22 ermöglicht.

Bevorzugt ist der Knick ausgehend von dem jeweiligen Hebel 44a bzw. 44b in einem Bereich von 20 % bis 40 % der Erstreckungslänge des Trägerhalters 42a und 42b zwischen dem jeweiligen Hebel 44a bzw. 44b und dem Komponententräger 36 ausgebildet, besonders bevorzugt in einem Bereich von 25 % bis 40 %. Der Knickwinkel beträgt zwischen 5° und 25°.

Durch die starre Kopplung des Komponententrägers 36 über die Trägerhalter 42a und 42b mit den jeweiligen Hebeln 44a bzw. 44b wird der Komponententräger 36 dann, wenn die Förderbaugruppe 22 durch die Aktuatoren 48a und 48b in seine Wartungsstellung angehoben wird, gleichzeitig zum Übergabelängsende 22b und darüber hinaus verschwenkt. Die Aktuatoren 48a und 48b sind gemeinsame Verstellaktuatoren der Förderbaugruppe 22 und des Komponententrägers 36 im oben in der Beschreibungseinleitung beschriebenen Sinne.

Wie insbesondere die Seitenansicht von Figur 5 zeigt, befindet sich der Komponententräger 36 dann, wenn sich die Maschine 10 in ihrem Wartungszustand mit angehobener Förderbaugruppe 22 befindet, längs der Förderbahn FB außerhalb des Erstreckungsbereichs der Förderbaugruppe 22. Im dargestellten Beispiel befindet sich der Komponententräger 36 längs der Förderbahn FB vor der Förderbaugruppe 22 und nicht mehr über ihr. In Höhenrichtung H befindet sich der Komponententräger 36 etwa im Erstreckungsbereich des Bodens 24a oder der Seitenwangen 24b und 24c. Durch die feste körperlich-mechanische Kopplung des Komponententrägers 36 mit den auch die Förderbaugruppe 22 hebenden und senkenden Hebeln 44a und 44b kann in äußerst vorteilhafter Weise der Komponententräger 36 im Arbeitszustand der Maschine 10 in einer für die von ihm getragene Funktionsbaugruppe optimalen Position über der Förderstrecke 26 angeordnet sein, welche eine Transportsilhouette nicht überschreitet. Gleichzeitig kann die Förderbaugruppe 22 ohne Besorgnis einer Kollision mit dem Komponententräger 36 zwischen ihren Betriebsstellungen: Arbeitsstellung und Wartungsstellung, bewegt werden, und zwar durch die ohnehin vorhandene Aktuatoranordnung zum Heben und Senken der Förderbaugruppe 22, welche auch den Komponententräger 36 kinematisch eindeutig verstellt.

Durch die Anlenkung der Kolbenstangen 46a und 46b an den Hebeln 44a bzw. 44b zwischen der Anlenkachse A und dem Kopplungsort B wird der Hubweg der Kolbenstangen 46a und 46b übersetzt und die Hubkraft untersetzt.

## Patentansprüche

1. Mobile Maschine (10) zur Förderung von mineralischem Schüttgut, umfassend einen Maschinenrahmen (12) und eine am Maschinenrahmen (12) relativ zu diesem verlagerbar gelagerte Förderbaugruppe (22), welche eine längs einer virtuellen Förderbahn (FB) verlaufende Förderstrecke (26) umfasst, wobei die Förderbaugruppe (22) wenigstens zur Förderung des Schüttguts längs der Förderbahn (FB) auf der Förderstrecke (26) ausgebildet ist, wobei die Maschine (10) einen Komponententräger (36) aufweist, welcher in einem zu wenigstens einer Handlung aus Förderung und Verarbeitung von Schüttgut betriebsbereiten Arbeitszustand der Maschine (10) in einer Höhenrichtung (H) mit Abstand von der Förderstrecke (26) quer zur Förderbahn (FB) über der Förderstrecke (26) verläuft, wobei der Komponententräger (36) wenigstens eine Funktionsbaugruppe (38) trägt, welche in wenigstens einem Wirkzusammenhang aus einem mechanischen und einem strömungsmechanischen und einem strahlungstechnischen und einem akustischen Wirkzusammenhang mit auf der Förderstrecke (26) gefördertem Schüttgut steht, wobei die Förderbaugruppe (22) mit einer Verlagerungskomponente in Höhenrichtung (H) relativ zum Maschinenrahmen (12) verlagerbar ist, **dadurch gekennzeichnet, dass** die mobile Maschine (10) einen Verstellaktuator (48a, 48b) aufweist, welcher mit dem Komponententräger (36) derart Bewegung und Kraft übertragend gekoppelt ist, dass der Komponententräger (36) durch den Verstellaktuator (48a, 48b) zu einer Verstellbewegung relativ zum Maschinenrahmen (12) antreibbar ist, wobei der Komponententräger (36) sowohl relativ zur Förderbaugruppe (22) als auch relativ zum Maschinenrahmen (12) beweglich an der mobilen Maschine (10) angeordnet ist, wobei der Verstellaktuator (48a, 48b) auch mit der Förderbaugruppe (22) derart Bewegung und Kraft übertragend gekoppelt ist, dass auch die Förderbaugruppe (22) durch den Verstellaktuator (48a, 48b) zu einer Verlagerungsbewegung relativ zum Maschinenrahmen (12) antreibbar ist.

2. Mobile Maschine (10) nach Anspruch 1,
**dadurch gekennzeichnet, dass** der Komponententräger (36) relativ zum Maschinenrahmen (12) um eine Schwenkachse (A) schwenkbeweglich am Maschinenrahmen (12) angeordnet ist.

3. Mobile Maschine (10) nach Anspruch 1 oder 2,
**dadurch gekennzeichnet, dass** ein Ausgangsglied (46a, 46b) des Verstellaktuators (48a, 48b) mit einem Gestänge oder Getriebe gekoppelt ist, welches sowohl mit der Förderbaugruppe (22) als auch mit dem Komponententräger (36) Bewegung und Kraft übertragend gekoppelt ist, so dass wenigstens während eines Zeitabschnitts eines Bewegungsbetriebs des Verstellaktuators (48a, 48b) gleichzeitig sowohl die Förderbaugruppe (22) als auch der Komponententräger (36) verlagert wird.

4. Mobile Maschine (10) nach Anspruch 3,
**dadurch gekennzeichnet, dass** das Gestänge oder Getriebe einen Hebel (44a, 44b) umfasst, welcher einen Anlenkabschnitt aufweist, in dem er um eine Anlenkachse (A) schwenkbar am Maschinenrahmen (12) angelenkt ist, und welcher einen Kopplungsabschnitt aufweist, in dem er mit der Förderbaugruppe (22) gekoppelt ist.

5. Mobile Maschine (10) nach Anspruch 4, unter Einbeziehung des Anspruchs 2, **dadurch gekennzeichnet, dass** der Komponententräger (36) starr mit dem Hebel (44a, 44b) zur gemeinsamen Schwenkbewegung um die Anlenkachse (A) als der Schwenkachse (A) verbunden ist.

6. Mobile Maschine (10) nach einem der vorhergehenden Ansprüche, unter Einbeziehung des Anspruchs 2,
**dadurch gekennzeichnet, dass** die Schwenkachse (A) orthogonal zu wenigstens einer Orientierung aus Orientierung der Förderbahn (FB) oder/und Orientierung der Höhenrichtung (H) verläuft.

7. Mobile Maschine (10) nach einem der vorhergehenden Ansprüche,
**dadurch gekennzeichnet, dass** die mobile Maschine (10) durch Relativbewegung der Förderbaugruppe (22) relativ zum Maschinenrahmen (12) mit der Bewegungskomponente in Höhenrichtung (H) in einen vom Arbeitszustand verschiedenen Wartungszustand bringbar ist, in welchem der Komponententräger (36) in einem Bereich angeordnet ist, welcher längs der Förderbahn (FB) außerhalb des Erstreckungsbereichs der Förderstrecke (26) gelegen ist.

8. Mobile Maschine (10) nach einem der vorhergehenden Ansprüche,
**dadurch gekennzeichnet, dass** die Förderstrecke (26) ein Sieb aufweist, durch welches das Schüttgut während seiner Förderbewegung längs der Förderbahn (FB) korngrößenabhängig getrennt wird.

9. Mobile Maschine (10) nach einem der vorhergehenden Ansprüche,
**dadurch gekennzeichnet, dass** die mobile Maschine (10) eine selbstfahrende Maschine (10) ist.

10. Mobile Maschine (10) nach einem der vorhergehenden Ansprüche,
**dadurch gekennzeichnet, dass** die Maschine (10) wenigstens eine Vorrichtung aus einer weiteren Fördervorrichtung und einer Brecherbaugruppe aufweist.

11. Mobile Maschine (10) nach einem der vorhergehenden Ansprüche, unter Einbeziehung des Anspruchs 8,
**dadurch gekennzeichnet, dass** die Maschine (10) wenigstens eine weitere Siebvorrichtung aufweist.

## Claims

1. A mobile machine (10) for conveying mineral aggregate material, comprising a machine frame (12) and a conveyor module (22) supported on the machine frame (12) so as to be displaceable relative to the latter, which comprises a conveyor line (26) running along a virtual conveyor path (FB), the conveyor module (22) being designed at least for conveying the aggregate material along the conveyor path (FB) on the conveyor line (26), the machine (10) comprising a component carrier (36), which in a working state of the machine (10), ready to operate for at least one action out of conveying and processing aggregate material, runs in an elevation direction (H) at a distance from the conveyor line (26) crosswise with respect to the conveyor path (FB) above the conveyor line (26), the component carrier (36) supporting at least one functional module (38), which interacts with the aggregate material conveyed on the conveyor line (26) in at least one manner out of a mechanical and a fluidic and a radiational and an acoustic manner, the conveyor module (22) being displaceable relative to the machine frame (12) with a displacement component in the elevation direction (H),
**characterized in that** the mobile machine (10) has an adjustment actuator (48, 48b), which is coupled to the component carrier (36) in a manner transmitting movement and power in such a way that the component carrier (36) is drivable by the adjustment actuator (48a, 48b) to perform an adjustment movement relative to the machine frame (12), wherein the component carrier (36) is situated on the mobile machine (10) movable both relative to the conveyor module (22) as well as relative to the machine frame (12), wherein the adjustment actuator (48a, 48b) is also coupled to the conveyor module (22) in a manner transmitting movement and power in such a way that the conveyor module (22) is also drivable by the adjustment actuator (48a, 48b) to perform a displacement movement relative to the machine frame (12).

2. The mobile machine (10) as recited in claim 1,
**characterized in that** the component carrier (36) is situated on the machine frame (12) in a manner swiveling about a swivel axis (A) relative the machine frame (12).

3. The mobile machine (10) as recited in claim 1 or 2,
**characterized in that** an output member (46a, 46b) of the adjustment actuator (48a, 48b) is coupled to a linkage or gearing, which is coupled both to the conveyor module (22) as well as to the component carrier (36) in a manner transmitting movement and power so that at least during a period of time of a movement operation of the adjustment actuator (48a, 48b) both the conveyor module (22) as well as the component carrier (36) are displaced simultaneously.

4. The mobile machine (10) as recited in claim 3,
**characterized in that** the linkage or gearing comprises a lever (44a, 44b), which comprises a hinging section, in which it is hinged on the machine frame (12) swivable about a hinge axis (A), and which has a coupling section, in which it is coupled to the conveyor module (22).

5. The mobile machine (10) as recited in Claim 4, with the inclusion of claim 2, **characterized in that** the component carrier (36) is rigidly connected to the lever (44a, 44b) for the joint swivel movement about the hinge axis (A) as swivel axis (A).

6. The mobile machine (10) as recited in one of the preceding claims, with the inclusion of claim 2,
**characterized in that** the swivel axis (A) runs orthogonally with respect to at least one orientation out of the orientation of the conveyor path (FB) and/or the orientation of the elevation direction (H).

7. The mobile machine (10) as recited in one of the preceding claims, **characterized in that** the mobile machine (10) is capable of being brought into a maintenance state distinct from the working state by a relative movement of the conveyor module (22) relative to the machine frame (12) with the movement component in the elevation direction (H), in which the component carrier (36) is situated in an area that lies along the conveyor path (FB) outside of the extension range of the conveyor line (26).

8. The mobile machine (10) as recited in one of the preceding claims, **characterized in that** the conveyor line (26) comprises a screen, through which the aggregate material is separated according to particle size during its conveyor movement along the conveyor path (FB).

9. The mobile machine (10) as recited in one of the preceding claims, **characterized in that** the mobile machine (10) is a self-propelled mobile machine (10).

10. The mobile machine (10) as recited in one of the preceding claims, **characterized in that** the machine (10) has at least one device out of a further conveyor device and a further crusher module.

11. The mobile machine (10) as recited in one of the preceding claims, with the inclusion of claim 8,
**characterized in that** the machine (10) has at least one further screening device.

## Revendications

1. Machine mobile (10) pour le transport de matières minérales en vrac, comprenant un châssis de machine (12) et un module de transport (22) monté sur le châssis de machine (12) de manière à pouvoir être déplacé par rapport à celui-ci, comprenant une trajectoire de transport (26) s'étendant le long d'une voie de transport virtuelle (FB), dans lequel le module de transport (22) est conçu au moins pour transporter les matières en vrac le long de la voie de transport (FB) sur la trajectoire de transport (26), dans lequel la machine (10) présente un support de composants (36), qui, dans un état de travail de la machine (10) prêt à fonctionner pour au moins une action de transport et de traitement de produits en vrac, s'étend dans une direction en hauteur (H) à distance de la trajectoire de transport (26), transversalement à la voie de transport (FB), au-dessus de la trajectoire de transport (26), dans lequel le support de composants (36) porte au moins un module fonctionnel (38) qui est dans au moins une relation fonctionnelle parmi une relation fonctionnelle mécanique, une relation fonctionnelle mécanique fluidique, une relation fonctionnelle de technique de rayonnement et une relation fonctionnelle acoustique avec des produits en vrac transportés sur la trajectoire de transport (26), dans lequel le module de transport (22) peut être déplacé avec une composante de déplacement dans le sens de la hauteur (H) par rapport au châssis de machine (12),
**caractérisé en ce que** la machine mobile (10) présente un actionneur de réglage (48a, 48b) qui est couplé au support de composants (36) en transmettant le mouvement et la force de telle sorte que le support de composants (36) peut être entraîné par l'actionneur de réglage (48a, 48b) dans un mouvement de réglage par rapport au châssis de machine (12), dans lequel le support de composants (36) est disposé sur la machine mobile (10) de manière mobile aussi bien par rapport au module de transport (22) que par rapport au châssis de machine (12), dans lequel l'actionneur de réglage (48a, 48b) est également couplé au module de transport (22) en transmettant le mouvement et la force de telle sorte que le module de transport (22) peut également être entraîné par l'actionneur de réglage (48a, 48b) pour un mouvement de déplacement par rapport au châssis de machine (12).

2. Machine mobile (10) selon la revendication 1,
**caractérisée en ce que** le support de composants (36) est disposé sur le châssis de machine (12) de manière à pouvoir pivoter par rapport au châssis de machine (12) autour d'un axe de pivotement (A).

3. Machine mobile (10) selon la revendication 1 ou 2,
**caractérisée en ce qu'**un organe de sortie (46a, 46b) de l'actionneur de réglage (48a, 48b) est couplé à une tringlerie ou à un engrenage qui est couplé à la fois au module de transport (22) et au support de composants (36) en transmettant le mouvement et la force, de sorte qu'au moins pendant une période de fonctionnement en mouvement de l'actionneur de réglage (48a, 48b), à la fois le module de transport (22) et le support de composants (36) sont déplacés simultanément.

4. Machine mobile (10) selon la revendication 3,
**caractérisée en ce que** la tringlerie ou la transmission comprend un levier (44a, 44b) qui présente une partie d'articulation dans laquelle il est articulé sur le châssis de machine (12) de manière à pouvoir pivoter autour d'un axe de pivotement (A), et qui présente une partie de couplage dans laquelle il est couplé au module de transport (22).

5. Machine mobile (10) selon la revendication 4, en tenant compte de la revendication 2,
**caractérisée en ce que** le support de composants (36) est relié de manière rigide au levier (44a, 44b) pour un mouvement de pivotement commun autour de l'axe d'articulation (A) en tant qu'axe de pivotement (A).

6. Machine mobile (10) selon l'une des revendications précédentes, en tenant compte de la revendication 2,
**caractérisée en ce que** l'axe de pivotement (A) est orthogonal à au moins une orientation parmi l'orientation de la voie de transport (FB) ou/et l'orientation de la direction de hauteur (H).

7. Machine mobile (10) selon l'une des revendications précédentes, **caractérisée en ce que** la machine mobile (10) peut être amenée dans un état de maintenance différent de l'état de travail par un mouvement relatif du module de transport (22) par rapport au châssis de machine (12) avec la composante de mouvement dans la direction de la hauteur (H), dans lequel le support de composants (36) est disposé dans une zone qui est située le long de la voie de transport (FB) en dehors de la zone d'extension de la trajectoire de transport (26).

8. Machine mobile (10) selon l'une des revendications précédentes, **caractérisée en ce que** la trajectoire de transport (26) présente un tamis à travers lequel le produit en vrac est séparé en fonction de la granulométrie pendant son mouvement de transport le long de la voie de transport (FB).

9. Machine mobile (10) selon l'une des revendications précédentes, **caractérisée en ce que** la machine mobile (10) est une machine automotrice (10).

10. Machine mobile (10) selon l'une des revendications précédentes, **caractérisée en ce que** la machine (10) présente au moins un dispositif composé d'un autre dispositif de transport et d'un module de concassage.

11. Machine mobile (10) selon l'une des revendications précédentes, tenant compte de la revendication 8,
**caractérisée en ce que** la machine (10) comporte au moins un autre dispositif de tamisage.
